# FASCICULE DE BREVET EUROPEEN

(11) **EP 0 870 651 B1**
(45) Date de publication et mention de la délivrance du brevet: **31.10.2001**
(21) Numéro de dépôt: 98400826.8
(22) Date de dépôt: 07.04.1998
(51) Int. Cl.: B60R 21/26

(54) **Générateur pyrotechnique à débit et volume de gaz adaptables pour coussin de protection**
Pyrotechnischer Gasgenerator mit anpassungsfähigem Durchfluss und Volumen für ein Luftkissen
Pyrotechnic gas generator with adaptive flow and volume for air bag

(30) Priorité: 11.04.1997 FR 9704465
(43) Date de publication de la demande: 14.10.1998
(73) Titulaire: LIVBAG S.N.C., 91710 Vert Le Petit (FR)
(72) Inventeur: Marsaud, Benoît, 27830 Neaufles Saint Martin (FR); Duvacquier, Daniel, 33300 Bordeaux (FR); Perotto, Christian, 91610 Ballancourt (FR)
(74) Mandataire: Pech, Bernard

(56) Documents cités:
- EP-A- 0 382 552
- DE-A- 4 121 039
- DE-A- 19 611 102
- FR-A- 2 233 202
- "VARIABLE OUTPUT PYROTECHNIC AIR BAG INFLATOR" RESEARCH DISCLOSURE., no. 379, novembre 1995, EMSWORTH GB, pages 743-745, XP000549207

## Description

L'invention se rapporte au domaine de la sécurité automobile et concerne plus particulièrement un générateur pyrotechnique de gaz pour conducteur destiné à gonfler un coussin de protection.

Depuis quelques années, de nouveaux générateurs pyrotechniques de gaz ont fait leur apparition et permettent de moduler la vitesse de gonflage en fonction de différents paramètres connue par exemple la nature et l'intensité du choc, ou encore la taille et le positionnement du passager. Ces générateurs comportent des initiateurs électriques placés dans des chambres de combustion séparées et sont mis en oeuvre à des instants différents. Ce décalage, de l'ordre de quelques millisecondes, se fait électroniquement et de façon programmée dans le temps afin d'optimiser le débit du générateur et donc le niveau de pression obtenu dans le coussin. Ainsi, lors d'un choc, le passager du véhicule automobile est protégé efficacement par un coussin dont le gonflage est plus adapté à la situation.

Le brevet US 3 972 545 décrit un générateur pyrotechnique de gaz pour passager qui comprend deux chambres séparées par une cloison consumable, chacune étant munie d'un chargement pyrotechnique et d'un initiateur. Selon l'intensité du choc, le déclenchement des deux initiateurs reliés à une unique alimentation électrique peut se produire de façon décalée. Lorsqu'un signal électrique de faible voltage est émis, seule une chambre est allumée à l'aide d'un initiateur électrique, la seconde étant allumée lorsque la cloison séparant les deux chambres est consumée. En revanche, lorsqu'un signal de haut voltage est émis, les deux initiateurs sont activés simultanément, entraînant ainsi un allumage simultané des deux chambres de combustion.

La demande de brevet EP 0 382 552 qui représente l'état de la technique le plus proche divulgue un générateur pyrotechnique de gaz plus spécialement conçu pour protéger un passager. Ce générateur est constitué par une pièce cylindrique monobloc divisée en deux parties par une cloison interne et présente deux chambres de combustion munies chacune d'un chargement pyrotechnique et d'un initiateur. En fonctionnement, un signal électrique est émis et les deux chargements sont allumés de façon décalée dans le temps, le décalage étant calculé en fonction de différents paramètres comme par exemple le poids ou le positionnement du passager. Ce générateur assure, en finalité, un gonflage total du coussin en 50 millisecondes.

Ainsi, ces deux générateurs, qui permettent de moduler la vitesse de gonflage du coussin, ne peuvent pas réduire, selon les circonstances, le volume de gaz final libéré dans le coussin. De plus, la fabrication de ces systèmes est relativement complexe et rend donc difficile la transposition de telles technologies pour des générateurs à faible coût et à faible encombrement, en particulier pour des générateurs "conducteur".

L'homme du métier est donc à la recherche d'un générateur pyrotechnique de gaz pour conducteur dont la fabrication est aisée et d'un coût peu élevé permettant, selon la situation, soit de ne libérer qu'un certain volume de gaz et donc de ne gonfler le coussin que partiellement, soit de libérer un volume de gaz maximum afin de gonfler totalement le coussin avec la possibilité de réguler la vitesse de gonflage.

L'invention concerne donc un générateur pyrotechnique de gaz destiné à la sécurité automobile comprenant notamment un corps cylindrique présentant une paroi latérale munie de deux extrémités et d'une paroi transversale étanche divisant ledit corps cylindrique en un compartiment amont et un compartiment aval, un chargement pyrotechnique et un système d'allumage étant disposés dans chaque compartiment, ledit corps comportant à chacune de ses extrémités l'un des deux systèmes d'allumage, caractérisé en ce que,
i) dans chaque compartiment, la paroi latérale comporte plusieurs orifices initialement obturés,
ii) un ensemble de sécurité enserre une partie de la paroi latérale du corps cylindrique et permet d'isoler chaque compartiment des gaz de combustion issus de l'autre compartiment,
iii) un carter, constitué par un couvercle et un boîtier solidarisés l'un à l'autre, enserre la paroi latérale externe du corps cylindrique et forme une chambre de diffusion autour de ladite paroi latérale,
iv) le carter comporte des évents d'évacuation des gaz de combustion.

Selon une caractéristique essentielle de l'invention, l'ensemble de sécurité impose donc que, dans chaque compartiment, le chargement pyrotechnique ne peut être initié qu'en raison de la mise à feu du système d'allumage qui lui est associé. Ainsi, les gaz de combustion issus de l'un des deux compartiments ne peuvent pas incidemment provoquer l'allumage du chargement pyrotechnique situé dans l'autre compartiment. Il est alors possible :
- soit de ne libérer qu'un volume de gaz limité, et donc de ne gonfler le coussin que partiellement, en initiant uniquement le système d'allumage logé dans le compartiment amont ou celui logé dans le compartiment aval,
- soit de gonfler totalement le coussin de protection en initiant les deux systèmes d'allumage simultanément ou avec un certain décalage dans le temps, la mise à feu décalée permettant de moduler la vitesse de gonflage du coussin.

Préférentiellement, le chargement pyrotechnique est constitué soit par une composition pyrotechnique choisie dans le groupe des compositions dites "à double base", c'est-à-dire les compositions à base de nitrocellulose et de nitroglycérine, soit par une composition pyrotechnique composite à base d'un liant organique et d'au moins une charge oxydante.

Selon une seconde caractéristique de l'invention, dans chaque compartiment, le chargement pyrotechnique est isolé du corps du générateur par une enveloppe cylindrique. Ainsi, l'enveloppe cylindrique protège le chargement pyrotechnique de l'humidité ambiante et d'un contact prolongé avec la paroi latérale ou la paroi transversale du corps. Avantageusement, l'enveloppe cylindrique présente une paroi latérale plaquée contre la paroi latérale interne dudit corps. Les orifices portés par cette dernière sont alors obturés par la paroi latérale de l'enveloppe cylindrique qui fait office d'opercules claquables.

Selon une troisième caractéristique de l'invention, dans chaque compartiment, le chargement pyrotechnique est calé entre un ressort prenant appui sur l'extrémité de la paroi latérale et une bague de calage en contact avec l'enveloppe cylindrique.

Avantageusement, chaque chargement pyrotechnique est sous la forme d'un bloc cylindrique perforé par une pluralité de canaux parallèles à l'axe dudit bloc de manière à ce que lesdits canaux soient parallèles aux génératrices du corps. Préférentiellement, le chargement pyrotechnique logé dans le compartiment amont est plus important que celui logé dans le compartiment aval et permet donc, en fonctionnement, de générer une plus grande quantité de gaz.

Avantageusement encore, le couvercle et le boîtier du carter sont solidarisés au moyen d'un plan de joint parallèle à l'axe du corps cylindrique.

Préférentiellement, le couvercle présente un rebord servant à la fixation d'un coussin de protection. Avantageusement, ce rebord est parallèle au plan de joint du carter.

Préférentiellement encore, le boîtier présente un fond plat destiné à servir de socle au générateur.

Selon un mode de réalisation préférée, l'ensemble de sécurité est constitué par une bande métallique annulaire, dont les extrémités sont jointes, et qui comporte des zones prédécoupées. Préférentiellement, l'ensemble de sécurité enserre la paroi latérale du corps cylindrique de telle façon que les orifices sont chacun recouverts par l'une des zones prédécoupées.

Préférentiellement, la paroi latérale présente un rétreint périphérique externe compris entre deux épaulements, ce rétreint servant de logement à l'ensemble de sécurité et contenant lesdits orifices. Ainsi, ce dernier est calé entre deux épaulements et ne peut pas, même en raison d'un choc violent, s'extraire de son logement.

Il est également possible de constituer un ensemble de sécurité en obturant chaque orifice par un clip inséré dans des rainures couvergentes réalisées de part et d'autre de chaque orifice.

Un générateur selon l'invention présente donc les deux avantages suivants :
- D'une part, la fabrication ne met en oeuvre qu'un faible nombre de pièces dont l'assemblage peut être facilement automatisé, ce qui permet de réduire très sensiblement les coûts de fabrication, tout en garantissant un gonflage correct et fiable du coussin de protection.
- D'autre part, la possibilité de faire varier, grâce à l'ensemble de sécurité, le volume de gaz généré ou la vitesse de gonflage du coussin assure une protection adaptée à la sévérité du choc et à la morphologie de la personne à protéger.

On donne ci-après une description détaillée du mode préféré de réalisation en se référant aux figures 1 à 7.

La figure **1** est une vue en coupe longitudinale d'un générateur selon l'invention.

La figure **2** est une vue selon la coupe II-II du générateur représenté à la figure 1.

La figure **3** est une vue selon la coupe III-III du générateur représenté à la figure 1.

La figure **4** est une vue en perspective de l'ensemble de sécurité du générateur selon l'invention.

La figure **5** est une vue en perspective du boîtier du générateur selon l'invention.

La figure **6** est une vue en perspective du couvercle du générateur selon l'invention.

La figure **7** est une vue en perspective du générateur selon l'invention.

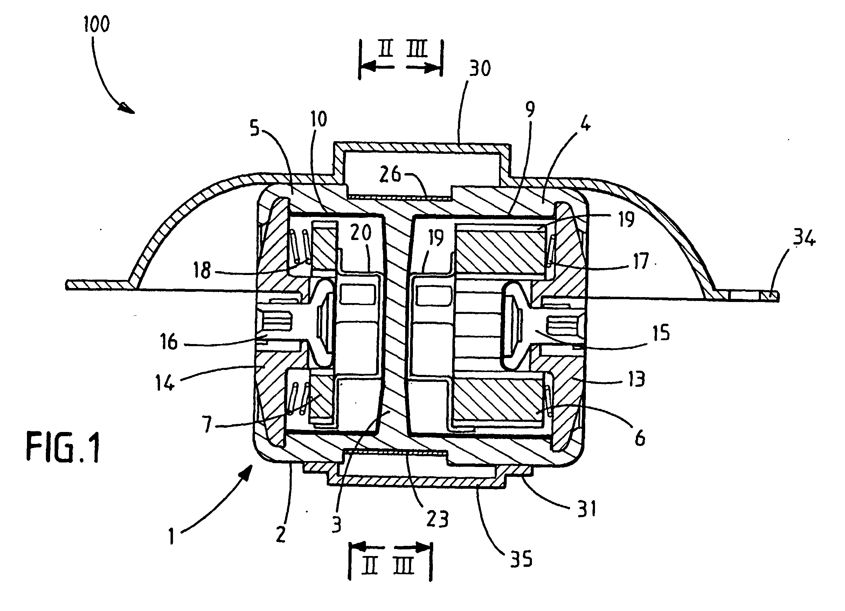

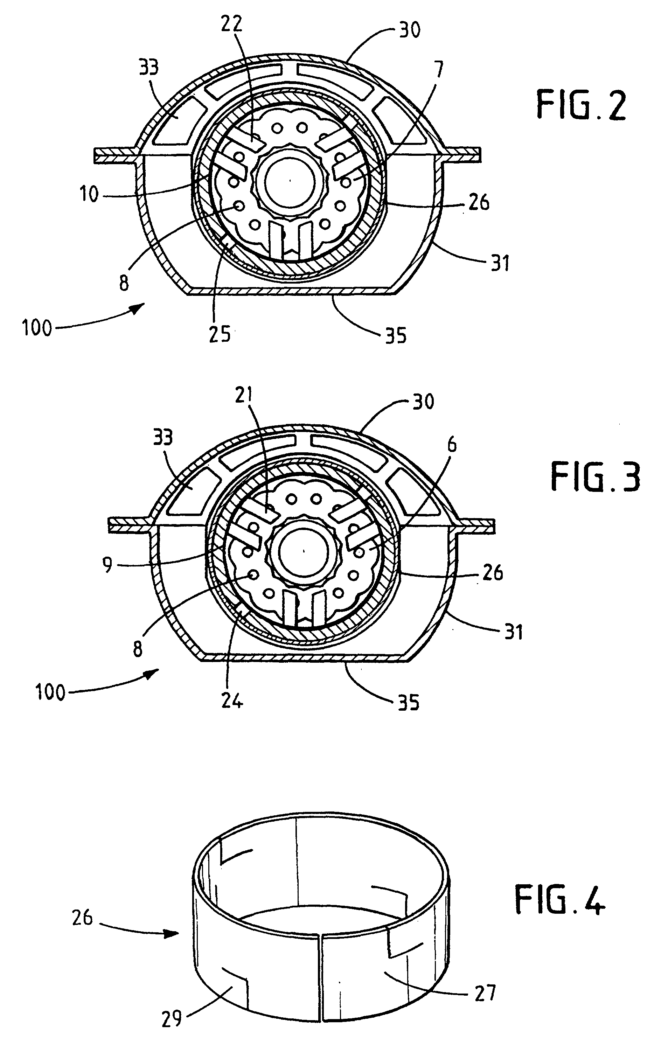

En se reportant aux figures 1 à 3, on observe qu'un générateur pyrotechnique de gaz 100 selon l'invention comprend un corps 1 cylindrique monobloc constitué par un métal suffisamment ductile pour pouvoir être serti, c'est-à-dire un métal présentant préférentiellement une capacité d'allongement supérieure à 20% et une résistance à la rupture supérieure à 400 MPa. Ce corps 1 comporte une paroi latérale 2 munie de deux extrémités ouvertes et une paroi transversale 3 étanche qui divise ledit corps 1 en un compartiment amont 4 et un compartiment aval 5. Chaque compartiment 4,5 contient un bloc 6,7 cylindrique qui constitue le chargement pyrotechnique et qui est perforé par une pluralité de canaux 8 parallèles à l'axe du bloc 6,7, celui-ci étant parallèle aux génératrices du corps 1 cylindrique monobloc. Chaque bloc 6,7 est isolé de la paroi latérale 2 et de la paroi transversale 3 par une enveloppe cylindrique 9,10. Celle-ci présente une extrémité fermée en appui contre la paroi transversale 3, une paroi latérale plaquée contre la paroi latérale 2 interne du corps 1 et une extrémité ouverte collée hermétiquement à une bague de fermeture 13,14 sertie dans l'extrémité ouverte du corps 1. Un allumeur 15, 16. électrique, dont la prise est protégée par un shunt, est inséré dans chaque bague de fermeture 13,14.

Le bloc 6,7 est calé dans chaque compartiment 4,5 à l'aide d'un ressort hélicoïdal 17,18 et d'une bague de calage 19,20. Le ressort 17,18 est en appui à la fois contre la bague de fermeture 13,14 et contre une extrémité du bloc 6,7. L'autre extrémité du bloc 6,7 vient en butée contre la bague de calage 19,20 qui est elle-même partiellement collée à l'extrémité fermée de l'enveloppe cylindrique 9,10. Avantageusement, la bague de calage 19,20 a la forme d'une cuvette cylindrique dont l'extrémité ouverte présente des pattes 21,22 qui enserrent le bloc 6,7.

La paroi latérale 2 présente un rétreint 23 périphérique externe de largeur constante qui s'étend de part de d'autre de la paroi transversale 3. Dans chaque compartiment 4,5, le rétreint 23 comporte des orifices 24,25 qui sont initialement obturés par la paroi latérale de l'enveloppe cylindrique 9,10 correspondante.

En se référant aux figures 1 à 4, on observe qu'un ensemble de sécurité 26 est constitué par une bande 27 métallique annulaire, dont les extrémités sont jointes, et qui comporte des zones prédécoupées 29. Cet ensemble de sécurité 26 enserre le rétreint 23 de la paroi latérale 2 de telle façon que les orifices 24 situés dans le compartiment amont 4 et les orifices 25 situés dans le compartiment aval 5 sont chacun recouverts par l'une des zones prédécoupées 29.

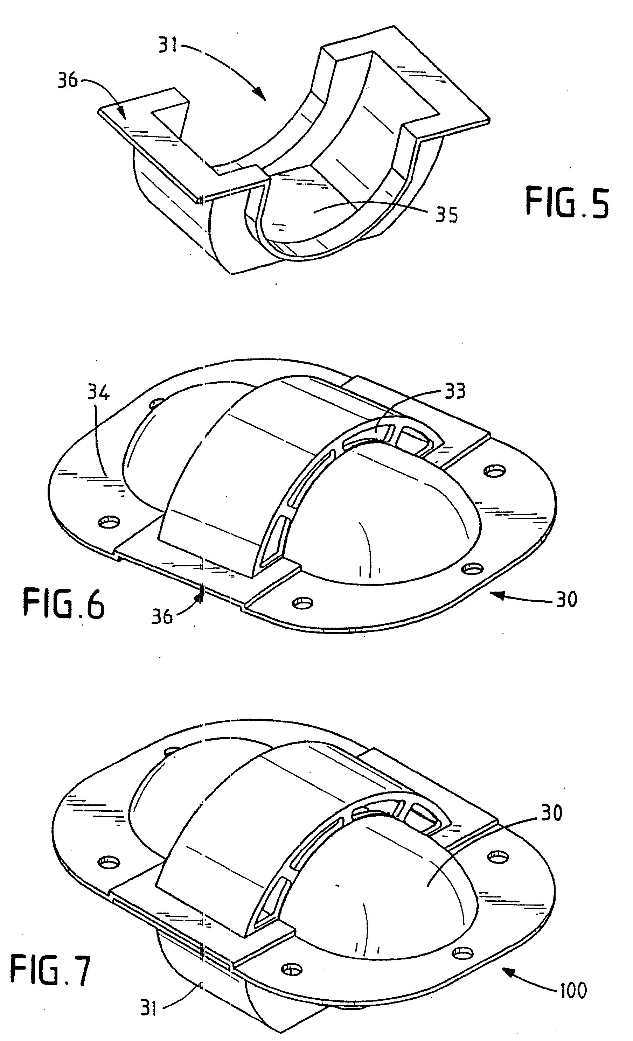

En se reportant aux figures 5 à 7, on observe qu'un couvercle 30 et un boîtier 31, hermétiquement collés sur la paroi latérale 2 externe du corps 1, sont solidarisés l'un à l'autre de manière étanche au moyen d'un plan de joint 36 parallèle à l'axe du corps 1 cylindrique, et constituent une chambre de diffusion 32 autour du rétreint 23 de la paroi latérale 2. Le couvercle 30 est muni d'évents 33 d'évacuation des gaz de combustion et présente un rebord 34, qui est parallèle au plan de joint 36, et sur lequel est riveté un coussin de protection (non représenté). De plus, le boîtier 31 comprend un fond plat 35 destiné à servir de socle au générateur 100.

Un tel générateur 100, couplé à un système de détection à fonctions multiples, permet les schémas de fonctionnement suivants. Lors d'un choc léger, un signal électrique émis par un détecteur de collision ne déclenche qu'un seul des deux allumeurs 15 ou 16, l'allumeur choisi étant celui dont le chargement pyrotechnique associé va générer le volume de gaz le mieux adapté à la situation. A titre d'exemple, si l'allumeur 15 du compartiment amont 4 est initié, les gaz de combustion qui sont alors générés viennent au contact du bloc 6, entraînant ainsi l'allumage dudit bloc 6. Lorsque la pression atteint la valeur de rupture de l'enveloppe cylindrique 9 qui obture les orifices 24, ladite enveloppe 9 se rompt au voisinage de ces derniers et les gaz exercent alors une pression sur les zones prédécoupées 29 qui recouvrent les orifices 24, ce qui entraîne une pliure de celles-ci dans le sens du flux de gaz. Les gaz pénètrent ensuite dans la chambre de diffusion 32 qui entoure le rétreint 23 de la paroi latérale 2 pour finalement s'échapper par les évents 33 d'évacuation des gaz de combustion et gonfler le coussin de protection. L'ensemble de sécurité 26, dont certaines zones prédécoupées 29 recouvrent les orifices 25, permet alors d'éviter que les gaz chauds qui sont générés par le bloc 6 ne viennent rompre l'enveloppe cylindrique 10 du compartiment aval 5 au voisinage des orifices 25 et par conséquence provoquer l'allumage du bloc 7. Le fonctionnement est similaire lorsque le détecteur de collision déclenche l'allumeur 16 logé dans le compartiment aval 5 au lieu de l'allumeur 15 logé dans le compartiment 4.

Si le choc est plus important, les deux allumeurs 15 et 16 sont mis à feu à des instants différents. A titre d'exemple, si l'allumeur 15 est tout d'abord mis en oeuvre comme précédemment, l'allumeur 16 du compartiment aval 5 est initié à la suite dudit allumeur 15 selon un retard programmé dans le temps. Le bloc 7 est alors allume et, lorsque la pression atteint une valeur seuil, l'enveloppe cylindrique 10 se rompt au voisinage des orifices 25. Les gaz générés exercent alors une pression sur les zones prédécoupées 29 qui recouvrent lesdits orifices 25, ce qui entraîne une pliure de ces dernières dans le sens du flux de gaz. Les gaz pénètrent ainsi dans la chambre de combustion 32 pour, en définitive, gonfler le coussin de protection.

Enfin, lorsque le choc est sévère, les deux allumeurs 15,16 sont initiés simultanément et provoquent la combustion simultanée des blocs 6 et 7.

## Revendications

1. Générateur pyrotechnique de gaz (100) destiné à la sécurité automobile comprenant notamment un corps (1) cylindrique présentant une paroi latérale (2) munie de deux extrémités (13,14) et d'une paroi transversale (3) étanche divisant ledit corps (1) cylindrique en un compartiment amont (4) et un compartiment aval (5), un chargement pyrotechnique (6,7) et un système d'allumage (15,16) étant disposés dans chaque compartiment (4,5), ledit corps comportant à chacune de ses extrémités (13,14) l'un des deux systèmes d'allumage (15,16), **caractérisé en ce que**,
**i)** dans chaque compartiment (4,5), la paroi latérale (2) comporte plusieurs orifices (24,25) initialement obturés,
**ii)** un ensemble de sécurité (26) enserre une partie de la paroi latérale (2) du corps (1) et permet d'isoler chaque compartiment (4,5) des gaz de combustion issus de l'autre compartiment,
**iii)** un carter, constitué par un couvercle (30) et un boîtier (31) solidarisés l'un à l'autre, enserre la paroi latérale (2) externe du corps (1) cylindrique et forme une chambre de diffusion (32) autour de ladite paroi latérale (2),
**iv)** le carter (30,31) comporte des évents d'évacuation des gaz de combustion.

2. Générateur selon la revendication 1, **caractérisé en ce que**, dans chaque compartiment (4,5), le chargement pyrotechnique (6,7) est isolé du corps (1) du générateur (100) par une enveloppe cylindrique (9,10).

3. Générateur selon la revendication 2, **caractérisé en ce que**, dans chaque compartiment (4,5), le chargement pyrotechnique (6,7) est calé entre un ressort (17,18) prenant appui sur l'extrémité (13,14) et une bague de calage (19,20) en contact avec l'enveloppe cylindrique (9,10).

4. Générateur selon la revendication 1, **caractérisé en ce que** chaque chargement pyrotechnique (6,7) est sous la forme d'un bloc cylindrique perforé par une pluralité de canaux (8) parallèles à l'axe dudit bloc de manière à ce que lesdits canaux (8) soient parallèles aux génératrices du corps (1).

5. Générateur selon la revendication 1, **caractérisé en ce que** le couvercle (30) et le boîtier (31) du carter sont solidarisés au moyen d'un plan de joint (36) parallèle à l'axe du corps cylindrique (1).

6. Générateur selon l'une quelconque des revendications 1 ou 5, **caractérisé en ce que**, le couvercle (30) présente un rebord (34) servant à la fixation d'un coussin de protection.

7. Générateur selon la revendication 1, **caractérisé en ce que** l'ensemble de sécurité (26) est constitué par une bande (27) métallique annulaire, dont les extrémités sont jointes, et qui comporte des zones prédécoupées (29).

8. Générateur selon la revendication 7, **caractérisé en ce que** l'ensemble de sécurité (26) enserre la paroi latérale (2) du corps (1) de telle façon que les orifices (24,25) sont chacun recouverts par l'une des zones prédécoupées (29).

9. Générateur selon l'une quelconque des revendications 7 ou 8, **caractérisé en ce que** la paroi latérale (2) présente un rétreint (23) périphérique externe compris entre deux épaulements, ce rétreint (23) servant de logement à l'ensemble de sécurité (26) et contenant les orifices (24,25).

## Patentansprüche

1. Pyrotechnischer Generator (100) für die Fahrzeugsicherheit, der insbesondere einen zylindrischen Körper (1) mit einer Seitenwand (2) aufweist, die zwei Enden (13, 14) und eine dichte Querwand (3) besitzt, die den zylindrischen Körper (1) in ein vorderes Abteil (4) und ein hinteres Abteil (5) trennt, wobei in jedem Abteil (4, 5) eine pyrotechnische Ladung (6, 7) und ein Zündsystem angeordnet sind, wobei der Körper an jedem seiner Enden (13, 14) eines der beiden Zündsysteme (15, 16) aufweist, **dadurch gekennzeichnet, daß**
i) in jedem Abteil (4, 5) die Seitenwand (2) mehrere ursprünglich verschlossene Öffnungen (24, 25) aufweist,
ii) eine Sicherheitseinheit (26) einen Teil der Seitenwand (2) des Körpers (1) umklammert und es ermöglicht, jedes Abteil (4, 5) von den vom anderen Abteil kommenden Verbrennungsgasen zu isolieren,
iii) aus einem Deckel (30) und einem Behälter (31), die fest miteinander verbunden sind, bestehendes Gehäuse die äußere Seitenwand (2) des zylindrischen Körpers (1) umklammert und eine Diffusionskammer (32) um die Seitenwand (2) herum bildet,
iv) das Gehäuse (30, 31) Abzugsöffnungen für die Verbrennungsgase aufweist.

2. Generator nach Anspruch 1, **dadurch gekennzeichnet, daß** in jedem Abteil (4, 5 ) die pyrotechnische Ladung (6, 7) durch eine zylindrische Hülle (9, 10) vom Körper (1) des Generators (100) isoliert wird.

3. Generator nach Anspruch 2, **dadurch gekennzeichnet, daß** in jedem Abteil (4, 5) die pyrotechnische Ladung (6, 7) zwischen einer auf dem Ende (13, 14) aufliegenden Feder (17, 18) und einem Klemmring (19, 20) in Kontakt mit der zylindrischen Hülle (9, 10) festgeklemmt wird.

4. Generator nach Anspruch 1, **dadurch gekennzeichnet, daß** jede pyrotechnische Ladung (6, 7) in Form eines zylindrischen Blocks vorliegt, der mehrere parallel zur Achse des Blocks liegende Kanäle (8) aufweist, derart, daß diese Kanäle (8) parallel zur Drehachse des Körpers (1) liegen.

5. Generator nach Anspruch 1, **dadurch gekennzeichnet, daß** der Deckel (30) und der Behälter (31) des Gehäuses über eine Verbindungsfläche (36) parallel zur Achse des zylindrischen Körpers (1) miteinander fest verbunden werden.

6. Generator nach einem der Ansprüche 1 oder 5, **dadurch gekennzeichnet, daß** der Deckel (30) eine Randleiste (34) aufweist, die zur Befestigung eines Airbags dient.

7. Generator nach Anspruch 1, **dadurch gekennzeichnet, daß** die Sicherheitseinheit (26) aus einem ringförmigen Metallband (27) besteht, dessen Enden miteinander verbunden sind und das vorausgeschnittene Zonen (29) aufweist.

8. Generator nach Anspruch 7, **dadurch gekennzeichnet, daß** die Sicherheitseinheit (26) die Seitenwand (2) des Körpers (1) so umklammert, daß die Öffnungen (24, 25) je von einer der vorausgeschnittenen Zonen (29) bedeckt werden.

9. Generator nach einem der Ansprüche 7 oder 8, **dadurch gekennzeichnet, daß** die Seitenwand (2) eine äußere Umfangs-Querschnittsverminderung (23) aufweist, die zwischen zwei Schultern liegt, wobei diese Querschnittsverminderung als Sitz für die Sicherheitseinheit (26) dient und die Öffnungen (24, 25) enthält.

## Claims

1. Pyrotechnic gas generator (100), which is designed for automobile safety, comprising in particular a cylindrical body (i) which has a lateral wall (2) provided with two ends (13, 14), and a sealed transverse wall (3), which divides the said cylindrical body (1) into an upstream compartment (4) and a downstream compartment (5), a pyrotechnic charge (6, 7) and an ignition system (15, 16) being disposed in each compartment (4, 5), the said body comprising at each of its ends (13, 14) one of the two ignition systems (15, 16), **characterised in that**
i) in each compartment (4, 5), the lateral wall (2) comprises a plurality of apertures (24, 25) which are initially closed;
ii) a safety assembly (26) encloses a part of the lateral wall (2) of the body (1), and makes it possible to isolate each compartment (4, 5) from the combustion gases obtained from the other compartment;
iii) a housing, consisting of a cover (30) and a case (31) which are integral with one another, encloses the outer lateral wall (2) of the cylindrical body (1), and forms a diffusion chamber (32) around the said lateral wall (2); and
iv) the housing (30, 31) comprises vents for discharge of the combustion gases.

2. Generator according to claim 1, **characterised in that**, in each compartment (4, 5), the pyrotechnic charge (6, 7) is isolated from the body (1) of the generator (100) by a cylindrical envelope (9, 10).

3. Generator according to claim 2, **characterised in that**, in each compartment (4, 5), the pyrotechnic charge (6, 7) is wedged between a spring (17, 18), which is supported on the end (13, 14), and a wedging ring (19, 20), which is in contact with the cylindrical envelope (9, 10).

4. Generator according to claim 1, **characterised in that** each pyrotechnic charge (6, 7) is in the form of a cylindrical block, which is perforated by a plurality of channels (8) parallel to the axis of the said block, such that the said channels (8) are parallel to the generatrices of the body (1).

5. Generator according to claim 1, **characterised in that** the cover (30) and the case (31) of the housing are rendered integral by means of a joining plane (36) which is parallel to the axis of the cylindrical body (1).

6. Generator according to claim 1 or claim 5, **characterised in that** the cover (30) has an edge (34) which is used to secure a protective cushion.

7. Generator according to claim 1, **characterised in that** the safety assembly (26) consists of an annular metal strip (27), the ends of which are joined, and which contains pre-cut areas (29).

8. Generator according to claim 7, **characterised in that** the safety assembly (26) encloses the lateral wall (2) of the body (1) such that the apertures (24, 25) are each covered by one of the pre-cut areas (29).

9. Generator according to claim 7 or claim 8, **characterised in that** the lateral wall (2) has an outer peripheral contracted area (23) contained between two shoulders, this contracted area (23) acting as a receptacle for the safety assembly (26), and containing the apertures (24, 25).
